# EUROPÄISCHE PATENTSCHRIFT

(11) **EP 3 960 427 B1**
(45) Veröffentlichungstag und Bekanntmachung des Hinweises auf die Patenterteilung: **01.01.2025**
(21) Anmeldenummer: 20193603.6
(22) Anmeldetag: 31.08.2020
(51) Int. Cl.: B29C 65/18, B29C 65/30, B29C 65/78, B65B 29/02, B65B 51/14

(54) **VORRICHTUNG ZUM HERSTELLEN EINES IN EINER UMHÜLLUNG AUFGENOMMENEN BEUTELS**
DEVICE FOR MANUFACTURING A BAG ACCOMMODATED IN AN ENVELOPE
DISPOSITIF DE FABRICATION D'UN SACHET REÇU DANS UNE ENVELOPPE

(43) Veröffentlichungstag der Anmeldung: 02.03.2022
(73) Patentinhaber: Teepack Spezialmaschinen GmbH & Co. KG, 40667 Meerbusch (DE)
(72) Erfinder: RYDLEWSKI, Thomas, 40470 Düsseldorf (DE); HOLLENBECK, Christoph, 41239 Mönchengladbach (DE); HÖFLE, Andreas, 63743 Aschaffenburg (DE); LAMBERTZ, Stefan, 50354 Hürth (DE); KNOPS, Hans, 47839 Krefeld (DE)
(74) Vertreter: Grünecker Patent- und Rechtsanwälte PartG mbB

(56) Entgegenhaltungen:
- EP-A1- 1 795 331
- EP-B1- 2 231 479
- US-A- 2 348 201
- US-A- 2 362 459
- US-A- 2 629 809

## Beschreibung

Die vorliegende Erfindung betrifft eine Vorrichtung zum Herstellen einer Verpackungseinheit, die einen ein brühfähiges Material enthaltenden Beutel umfasst, der in einer üblicherweise aromadichten Umhüllung vorgesehen ist.

Eine gattungsgemäße Vorrichtung mit den oberbegrifflichen Merkmalen ist aus EP 2 231 479 B1 bekannt. Bei dieser vorbekannten Vorrichtung wird der Beutel zunächst in einer Umhüllungsstation zwischen einander gegenüberliegende Schenkel einem als ebene Bahn zugeführten Umhüllungsmaterial gelegt, indem der Beutel auf die Bahn gelegt und diese um den Beutel gefaltet und von zu einem zugeführten Umhüllungsmaterial abgeschnitten wird, sodass ein Umhüllungsmaterialstück vorgefertigter Länge den Beutel in sich aufnimmt. Durch das Falten des Umhüllungsmaterials wird ein Rand der Umhüllung des Beutels bereits gebildet. Es besteht allerdings die Notwendigkeit, eine U-förmig ausgebildete Siegelnaht zu formen, sodass die Umhüllung umfänglich um den Beutel herum geschlossen ist und sich eine aromadichte Verpackung des brühfähigen Materials innerhalb des Beutels ergeben kann.

Bei diesem brühfähigen Material handelte sich in der Regel um Tee oder anderes aufgussfähiges Material aus getrocknetem Pulver oder Blättern, dessen Qualität und Geschmack durch Umwelteinflüsse beeinträchtigt werden kann, sodass die zuvor erwähnte aromadichte Verpackung notwendig sein kann. Dies gilt auch für die vorliegende Erfindung.

Das Ausbilden der U-förmigen Siegelnaht erfolgt bei dem zuvor erwähnten Stand der Technik über eine Siegeleinrichtung, die an der Außenumfangsfläche eines Karussells eine Vielzahl von Siegeleinheiten aufweist, die jeweils für sich gegeneinander verschwenkbare Siegelbacken aufweisen, die die Umhüllung zusammen mit dem Beutel empfangen und im Rahmen einer schrittweisen Drehbewegung des Karussells geschlossen werden, um während der Drehbewegung des Karussells die U-förmigen Ränder der Umhüllung durch Schweißen zu versiegeln und die so geschlossene Umhüllung an einer anderen Station abzugeben.

Dieser Ausgestaltung liegt die Überlegung zugrunde, dass im Verhältnis zu anderen Stationen der vorbekannten Vorrichtung das Einsiegeln des Beutels in der Umhüllung durch Ausbilden von Schweißnähten eine größere Verweildauer in der Siegelstation benötigt, als in den vorherigen Stationen. So können die einzelnen Arbeitsschritte in der Siegelstation durch Drehung des Karussells zeitlich aufgeteilt werden, ohne die Taktung der gesamten Vorrichtung zu unterbrechen oder zu stören.

Für das effektive Einsiegeln der Umhüllung insbesondere im Wege des Verschweißens ist es erforderlich, die Umhüllung mit ihren Rändern zwischen die Siegelbacken zu bringen, die Siegelbacken gegen die Umhüllung anzulegen, eine hinreichende Wärmemenge in die Umhüllung einzubringen, um diese jedenfalls so anzuschmelzen, dass die gegeneinander liegenden Bahnen der Umhüllung aufschmelzen und miteinander verschweißen. Diese Siegelung ist aufgrund der eingebrachten Wärme und der notwendigen Kühlzeit noch nicht unmittelbar formsteif, so dass die Verpackungseinheit bestehend aus dem Beutel und der Umhüllung üblicherweise erst dann weiterverarbeitet werden kann, wenn eine gewisse Kühlzeit eingehalten wurde.

Da die Vorrichtung zur Herstellung der Verpackungseinheit eine Einrichtung für die Massenherstellung von Verbrauchsmaterialien ist, kommt es auf eine schnelle Taktung und eine wirtschaftliche Herstellung der Verpackungseinheit an.

Der vorliegenden Erfindung liegt das Problem zugrunde, eine Vorrichtung der eingangs genannten Art anzugeben, die eine schnellere und damit wirtschaftliche Herstellung eines in einer aromadichten Umhüllung aufgenommenen Beutels erlaubt.

Zur Lösung dieses Problems wird mit der vorliegenden Erfindung eine Vorrichtung mit den Merkmalen von Anspruch 1 angegeben.

Bei der erfindungsgemäßen Lösung hat zumindest eines der Backenelemente unterhalb der Siegelfläche eine trogförmige Ausnehmung. Der Boden der trogförmigen Ausnehmung wird durch einen Flächenabschnitt des Backenelementes gebildet, der die Siegelfläche ausbildet. Gegenüberliegend dazu ist der Trog üblicherweise offen. In der trogförmigen Ausnehmung ist jedenfalls ein wendelförmig gelegter Heizleiter aufgenommen.

Hierin unterscheidet sich der erfindungsgemäße Vorschlag von dem vorbekannten Stand der Technik. Backenelemente einer Siegelstation der vorerwähnten Art haben heutzutage eine Bohrung, die sich parallel zu der Siegelfläche erstreckt und eine zylindrische Heizpatrone aufnimmt. Diese Heizpatrone ist zusammen mit einer Wärmeleitpaste in die Bohrung eingesetzt. Die vorbekannte Lösung ist im Hinblick auf die gewünschte Homogenität der Wärme auf der Siegelfläche nachteilig. Systembedingt ist die Wärmeleistung der Heizpatrone beschränkt, so dass auch die Wärmeleistung nicht immer ausreicht für eine rasche Erwärmung der Umhüllung im Rahmen des Verschweißens.

Bei der erfindungsgemäßen Lösung ist der Heizleiter wendelförmig in den Trog gelegt. Der Heizleiter weist eine Vielzahl von entlang einer Achse hintereinander wendelförmig gelegten Ringsegmenten auf. Dabei wird eine Form bevorzugt, bei der die Ringsegmente jeweils den gleichen Durchmesser haben, so dass der Trog mit einer einheitlichen Höhe ausgebildet werden kann. Bevorzugt ist in dem Trog lediglich ein einziger Heizleiter vorgesehen, der die gesamte Wärmeleistung in das jeweilige Backenelement einbringt.

Dabei ist zu beachten, dass das Backenelement üblicherweise U-förmig ausgebildet ist, um die zuvor erwähnte U-förmig gestaltete Schweißnaht auszubilden. Gemäß einer Besonderheit der vorliegenden Erfindung sind das Backenelement und die trogförmige Aufnahme bevorzugt L-förmig mit einem Längsschenkel und einem Querschenkel ausgebildet. Das Backenelement ist bevorzugt ebenfalls L-förmig ausgeformt. Der Heizleiter hat eine Längswendel und eine sich zu dieser rechtwinklig erstreckende Querwendel. Die beiden Wendeln gehen unmittelbar ineinander über. Diese L-förmige Ausbildung des Heizleiters wird durch entsprechendes Legen der Wendeln und Biegen des Heizleiters verwirklicht. Dabei ist eine Form zu bevorzugen, bei welcher der Heizleiter lediglich gebogen, nicht aber geknickt wird. Der Heizleiter wird üblicherweise mit einem Radius verformt, der nicht kleiner als der Radius der einzelnen Wendeln ist. Die Längswendel überdeckt dabei üblicherweise die Querwendel. In Verlängerung der Längsachse der Längswendel bzw. in Verlängerung der Längsachse der Querwendel befindet sich dementsprechend auch ein Längenabschnitt der jeweils anderen Wendel. So wird in dem Eckbereich des L-förmigen Backenelementes eine hinreichende Erwärmung zum Aufschmelzen der Umhüllung eingebracht. Entsprechendes gilt für die Anordnung des wendelförmig gelegten Heizleiters im Falle eines U-förmigen Backenelementes.

Gemäß einer bevorzugten Weiterbildung der vorliegenden Erfindung sind in der trogförmigen Ausnehmung zwei Wendeln nebeneinander angeordnet. Bei diesen Wendeln handelt es sich üblicherweise um die Querwendeln, d. h. diejenigen Wendeln, die im Falle eines L-förmig ausgebildeten Backenelementes in den Trogabschnitt eingesetzt sind, der in dem Querschenkel des Backenelementes ausgespart ist. Im Falle einer U-förmig ausgebildeten Ausnehmung sind die beiden nebeneinander angeordneten Wendeln in einer mittleren Basis aufgenommen, welche die beiden Längsschenkel des Backenelementes miteinander verbindet und voneinander beabstandet. Ersichtlich ist die vorliegende Erfindung nicht auf L-förmig gebildete Backenelemente beschränkt. Bei solchen Backenelementen sind auf gegenüberliegenden Seiten einer Siegelebene jeweils zwei Backenelemente vorgesehen, die relativ zueinander verschwenkbar sein können, um nicht nur durch eine Schwenkbewegung die Siegelbacken zu öffnen, sondern darüber hinaus zwischen den Längsschenkeln mehr Platz für das Entnehmen der aromadichten Verpackungseinheit bzw. zum Einbringen der Umhüllung in die Siegelebene und zwischen die Backenelemente vor dem Einsiegeln zu schaffen. Bei einem U-förmigen Backenelement ist auf jeder Seite der Siegelebene jeweils ein Backenelement vorgesehen. Die Backenelemente sind üblicherweise lediglich um eine oder mehrere Achsen schwenkbar, die parallel zueinander verlaufen.

Gemäß einer weiteren bevorzugten Ausgestaltung der vorliegenden Erfindung sind zumindest zwei Thermoelemente in die trogförmige Ausnehmung eingebracht. Je Backenelement und/oder je einzelnem Heizleiter sind bevorzugt jeweils zwei Thermoelemente vorgesehen. Das eine der Thermoelemente ist üblicherweise der Siegelfläche zugeordnet und erfasst deren Ist-Temperatur für die Regelung der Heizleistung. Das andere Thermoelement kann in gleicher Weise vorgesehen sein. Hierdurch wird die Redundanz erhöht und das Backenelement kann auch beim Versagen eines der Thermoelemente weiter zur Regelung der Heizleitung benutzt werden. Bevorzugt ist indes das andere der Thermoelemente dem Heizleiter zugeordnet und erfasst dessen Ist-Temperatur. Es erfasst als Übertemperatur-Thermoelement eine etwaige Überhitzung des Heizleiters und ist mit einer dem Heizleiter zugeordneten Regelung so datenmäßig verbunden, dass im Falle einer Überhitzung die Bestromung des Heizleiters ausgesetzt, bevorzugt eine Fehlermeldung ausgegeben und der Betrieb unterbrochen wird.

Die Steuerung kann dabei so eingerichtet sein, dass beim Versagen des einen der Thermoelemente das andere Thermoelement zur Regelung der Heizleitung genutzt werden kann.

Gemäß bevorzugter Weiterbildungen wird die Wärmeübertragung zwischen dem Heizleiter und dem Backenelement verbessert: Das Backenelement besteht dazu bevorzugt aus einem gut wärmeleitfähigen metallischen Material, insbesondere einem gut wärmeleitfähigen Stahl. Ein solcher Stahl ist beispielsweise Chrom-Nickel-Stahl. Das das Backenelement ausbildende metallische Material sollte eine Wärmeleitfähigkeit von zumindest 21 W/mK W haben. Die trogförmige Ausnehmung ist aus diesem Vollmaterial durch Fräsen hergestellt. Dabei wird der Boden der Ausnehmung auf die Krümmung des wendelförmig gelegten Heizleiters angepasst ausgebildet. In der so gebildeten konkaven Mulde des Backenelementes liegen die einzelnen Wendeln des Heizleiters mit einem Umschlingungswinkel von zumindest 160°, bevorzugt 180° unmittelbar wärmeleitend an der Oberfläche des Backenelementes an. So ist ein kurzer Wärmeleitweg zwischen dem Heizleiter und der Siegelfläche geschaffen. Der kleinste Abstand zwischen der konkaven Mulde und der Siegelfläche beträgt bevorzugt nicht mehr als 9 mm. Nach dem Einlegen des wendelförmig gelegten Heizleiters in die trogförmige Ausnehmung wird diese mit einer wärmeleitfähigen Masse ausgefüllt. Dabei handelt es sich bevorzugt um eine Lotmasse, welche schmelzflüssig in die trogförmige Ausnehmung eingebracht wird, um verbleibende Freiräume auszufüllen.

Nach einer bevorzugten Weiterbildung der vorliegenden Erfindung wird der Heizleiter durch einen koaxialen Mantelheizleiter gebildet. Bei diesem Mandelheizleiter besteht die überwiegende Länge des Heizleiters aus einem dünnwandigen, üblicherweise metallischen Rohr, in welches ein elektrisch isolierendes Material eingefüllt ist, das einen Widerstandsheizleiter umgibt, welcher sich im Inneren des Rohres befindet. Bei der isolierenden Keramik kann es sich beispielsweise um Magnesiumoxid oder Aluminiumoxid handeln. An den Enden des Rohres sind jeweils elektrisch isolierende Hülsen in das Rohr eingesetzt, deren Wärmeleitfähigkeit in der Regel geringer als die Wärmeleitfähigkeit der isolierenden Keramik ist. So sind die jeweiligen Enden des Heizleiters verhältnismäßig kalt. Diese Enden ragen aus der trogförmigen Ausnehmung heraus und sind zum Einbringen des Leistungstromes in den Heizleiter bevorzugt mit einem Kontaktelement einer Steckverbindung versehen.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine Seitenansicht wesentlicher Teile eines Ausführungsbeispiels einer Vorrichtung zum Herstellung eines umhüllten Beutels;
- Figur 2: die in Figur 1 gezeigte Beutelherstellungseinrichtung in vergrößerter Darstellung beim Ausschieben von Beutel und Folie;
- Figur 3: eine perspektivische Draufsicht der Siegelstation des Ausführungsbeispiels nach Figur 1 bei geöffneten Siegelbacken;
- Figur 4: eine perspektivische Draufsicht auf die Unterseite eines Ausführungsbeispiels eines Backenelementes;
- Figur 5: eine Querschnittansicht entlang der Linie V-V gemäß Figur 4;
- Figur 6: eine Querschnittansicht entlang der Linie VI-VI gemäß Figur 4 und
- Figur 7: eine Draufsicht auf eine Verpackungseinheit bestehend aus Beutel und Folie.

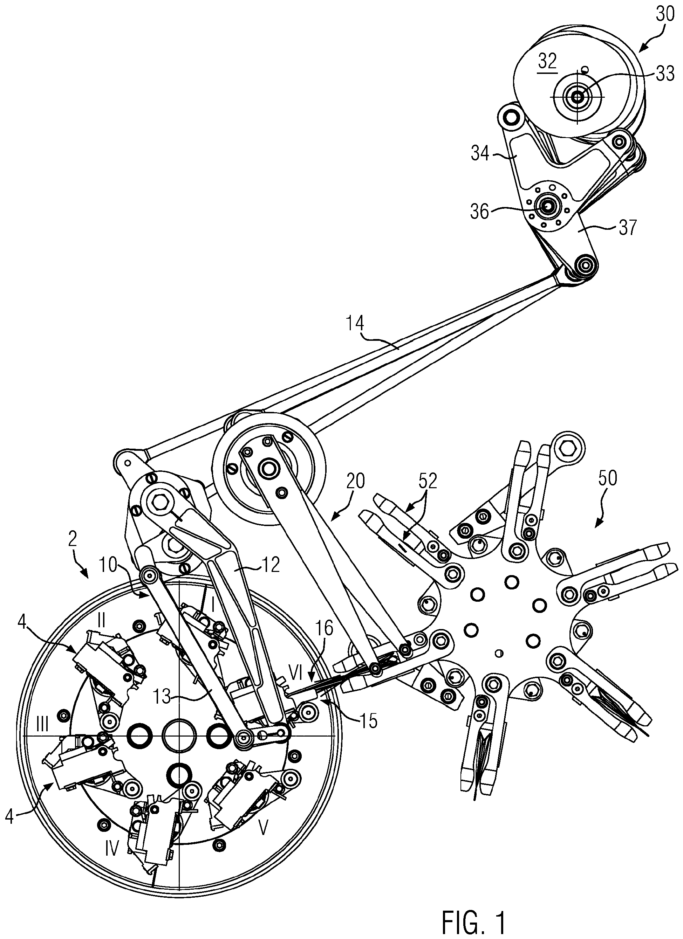

Das in Figur 1 gezeigte Ausführungsbeispiel hat eine mit Bezugszeichen 2 gekennzeichnete Beutelherstellungseinrichtung und eine mit Bezugszeichen 100 gekennzeichnete Siegelstation.

Die Beutelherstellungseinrichtung 2 umfasst ein Karussell mit mehreren um eine Achse drehenden Aufnahmen 4 zum Aufnehmen einer wasserdurchlässigen Umhüllung, die zur Ausbildung des Beutels ein brühfähiges Material enthaltend umgeformt und üblicherweise mit einem Faden und einem Etikett verbunden wird. Bezüglich der einzelnen Stationen und deren Ausgestaltung kann auf den Stand der Technik verwiesen werden, so beispielsweise EP 2 231 479 B1 oder WO 01/62600 A1. Mit den Bezugszeichen I bis VI sind dabei in Figur 1 verschiedene Positionen gekennzeichnet, in denen sich die Aufnahme 4 befinden können, um die unterschiedlichen Komponenten des fertig hergestellten bzw. fertigzustellenden Beutels zu empfangen und zu verarbeiten. Hierbei einwirkende Elemente sind aus Gründen einer klaren Darstellung nicht gezeigt. In Position VI ist der Beutel fertiggestellt.

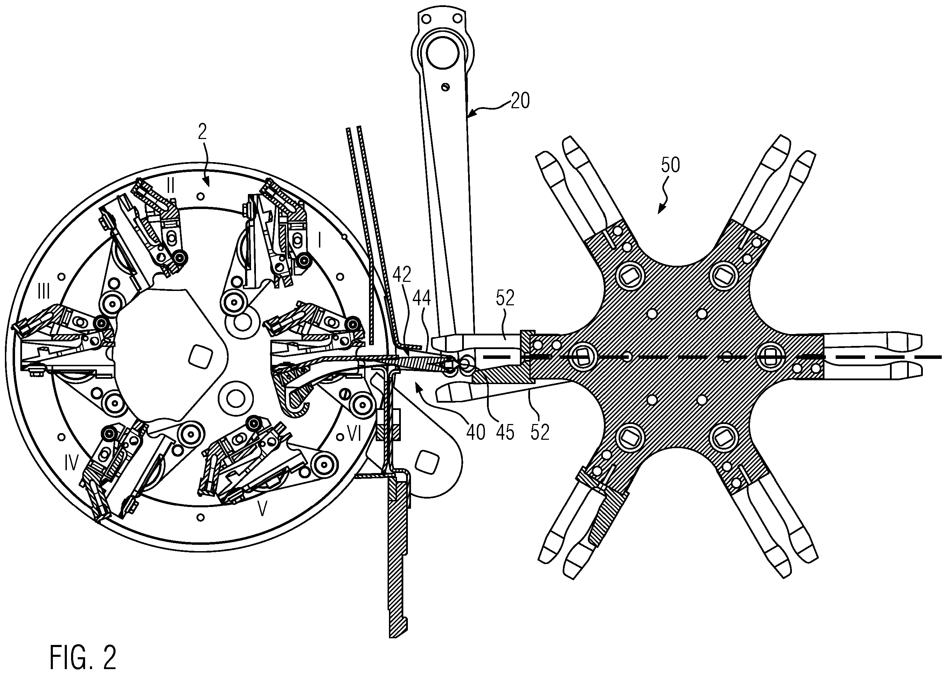

Die Figuren 1 und 2 zeigen Elemente einer mit Bezugszeichen 10 gekennzeichneten Beutelhandhabungseinrichtung und einer mit Bezugszeichen 20 gekennzeichneten Umhüllungsmaterialhandhabungseinrichtung. Bei dem Umhüllungsmaterial des gezeigten Ausführungsbeispiels handelt es sich um eine aromadichte Folie. So wird in der nachstehenden Beschreibung auf eine Folienhandhabungseinrichtung 20 abgestellt. Die Beutelhandhabungseinrichtung 10 umfasst zwei sich in etwa parallel erstreckende Arme 12, 13, die gelenkig miteinander verbunden sind und über Koppelstangen 14 mit einer gemeinsamen Antriebseinrichtung 30 gekoppelt sind. Diese gemeinsame Antriebseinrichtung 30 hat verschiedene Kurvenscheiben 32, die verdrehfest auf einer gemeinsamen Antriebswelle 33 der Antriebseinrichtung 30 befestigt sind und mit Abnehmern 34 gekoppelt sind, in denen die Außenumfangsflächen der Kurvenscheiben 32 jeweils abrollen, wobei die Abnehmer 34 für sich jeweils auf einer gemeinsamen Lagerachse 36 verschwenkbar gelagert und mit einem Hebel 37 versehen sind, der gelenkig mit der zugehörigen Koppelstange 14 verbunden ist. Die Koppelstangen 14 wirken über Hebel auf die Arme 12, 13 ein.

Die Antriebswelle 30 betätigt sowohl die einzelnen Komponenten der Beutelhandhabungseinrichtung 10 wie auch die Komponenten der Folienhandhabungseinrichtung 20. So sind beide Handhabungseinrichtungen 10, 20 mit einem gemeinsamen Antrieb versehen und zwangssynchronisiert.

Wie Figur2 zu entnehmen ist, werden eine in Figur 1 schematisch dargestellte Folie 40 zusammen mit einem Beutel 42 aus der Beutelherstellungseinrichtung 2 heraus und in Richtung auf ein Transportrad 50 abgeschoben, wobei eine durch Falten des Materials der Folie 40 gebildete und zwischen zwei Schenkeln 44 der Folie 40 gebildete Falz 45 vorläuft und der Beutel 42 nachläuft. Die Folienhandhabungseinrichtung 20 greift randseitig an der Folie 40 an. Der Beutel 42 wird von hinten durch Betätigen eines Klemmschuhs 15 mit einer Klemmfeder 16 ausgeschoben, indem der Klemmschuh 15 zusammen mit der Klemmfeder 16 zusammen mit den vorderen Enden der vorderen und hinteren Beutelhandhabungsarme 12, 13 radial von der Beutelherstellungseinrichtung 2 wegbewegt werden. Am Ende dieser Bewegung ist der Beutel 42 in die eingeschlagene Folie 40 gelegt und zwischen Klemmarmen 52 des Transportrades 50 geklemmt.

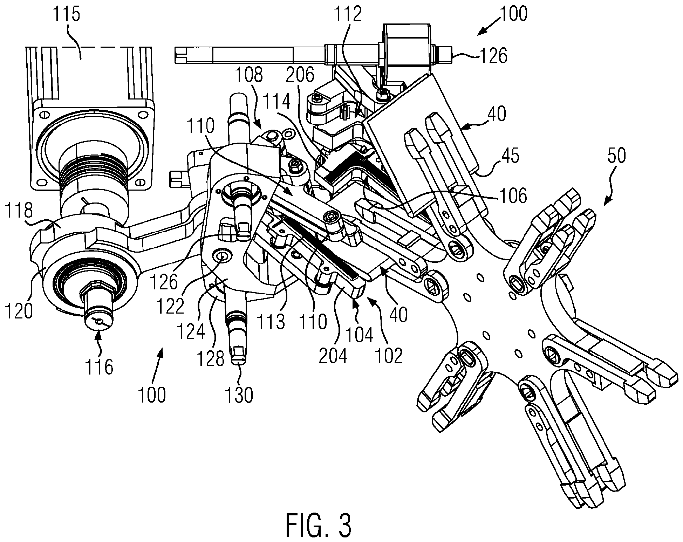

Die Siegelstation 100 hat mit Bezugszeichen 102 und 108 gekennzeichnete Siegelbacken, wobei die in den Figuren 3 bis 9 jeweils unten dargestellte Siegelbacke 102 aus einem ersten Backenelement und einem zweiten Backenelementgebildet ist. In gleicher Weise besteht die oberhalb davon dargestellte obere Siegelbacke 108 aus zwei Backenelementen, die nachfolgend als Gegenbackenelemente 110 und 112 bezeichnet werden. Wie Figur 3 verdeutlicht, ist jedes Backenelement 104, 106 in der Draufsicht L-förmig ausgebildet und hat einen Längsschenkel 204 und einen sich rechtwinklig dazu erstreckenden Querschenkel 206. Die Längsschenkel 204 bilden jeweils eine Längssiegelung, durch welche die einander gegenüberliegenden Schenkel 44 an ihrer Längsseite gefügt werden. Die beiden Querschenkel 206 bilden zusammen eine Siegelfläche jeweils der Siegelbacken 102, 103, die zur Ausbildung einer Quersiegelung angepasst ausgebildet ist und diese an der Folie 40 so erzeugt, dass die gegenüberliegend zu der Falz 45 liegende Querseite des Folienmaterials versiegelt wird. Die Längssiegelungen und die Quersiegelungen erlauben einen hermetischen Abschluss des Inneren der Folienverpackung. Die vierte Seite wird durch die Falz 45 verschlossen. Jedes der Backenelemente 104, 106, 110, 112 bildet eine erhabene L-förmige Siegelfläche 113, 114 aus.

Das Backenelement 104 und das Gegenbackenelement 110 sind über einen gemeinsamen Antrieb 115 in Form eines Servomotors angetrieben. Hierzu sind exzentrisch zu einer Antriebswelle 116 des Antriebs 115 Pleuel vorgesehen, von denen der benachbart zu dem Antrieb 115 vorgesehene Pleuel der Gegenbacke 110 zugeordnet ist und dementsprechend nachfolgend als Gegenbacken-Pleuel 118 bezeichnet wird, und der andere Pleuel, welcher auf der dem Antrieb 115 gegenüberliegenden Seite des Gegenbacken-Pleuels 118 vorgesehen ist, als Siegelbacken-Pleuel 120 benannt und gekennzeichnet wird.

Dieser Siegelbacken-Pleuel 120 ist frei drehbar und exzentrisch an der Antriebswelle 116 gelagert. Das andere Ende des Siegelbacken-Pleuels 120 ist gelenkig an einem mit Bezugszeichen 122 gekennzeichneten Gelenkpunkt an einem Siegelbacken-Schwenkarm 124 befestigt, der an seinem einen Ende das Backenelement 104 trägt und an seinem anderen Ende verschwenkbar um eine im Folgenden als Siegelbacken-Schwenkachse bezeichnete Schwenkachse 126 gelagert ist, die mit einem eigenständigen, nicht gezeigten Antrieb verbunden ist.

In entsprechender Weise ist der Gegenbacken-Pleuel 118 mit einem Gegenbacken-Schwenkarm 128 gelenkig verbunden, der die Gegenbacke 110 trägt und an seinem gegenüberliegenden Ende an einer Gegenbacke-Schwenkachse 130 verschwenkbar gelagert ist. Wie sich aus der vorstehenden Beschreibung ergibt, sind für das erste und zweite Paar von Backenelementen 104, 110; 106, 112 jeweils Kniehebel vorgesehen, wobei der Kniehebel zu dem Backenelement 104 den Siegelbacken-Pleuel 120 aufweist und der Kniehebel zu dem Gegenbackenelement 110 den Gegenbacken-Pleuel 118 umfasst. Dabei sind die beiden Pleuel 118, 120 um die gemeinsame Antriebswelle 116 drehbar gelagert und von dieser abgestützt. Sie sind exzentrisch zu dieser Antriebswelle 116 gelagert. Die Exzenter sind aber winkelig gegeneinander versetzt. Diese Kniehebel zwingen den Backen- bzw. Gegenbackenelementen 104; 110 bei einer drehenden Bewegung der zugehörigen Antriebe 115 eine Schwenkbewegung auf, in deren Rahmen sich die L-förmigen Backenelemente 104, 106 bzw. die Gegenbackenelemente 110, 112 zur Ausformung einer U-förmigen Siegelfläche, gebildet durch die beiden L-förmigen Siegelflächen 113, 114, annähern und die Folie 40 zur Ausbildung einer U-förmigen Schweißnaht zwischen sich klemmen.

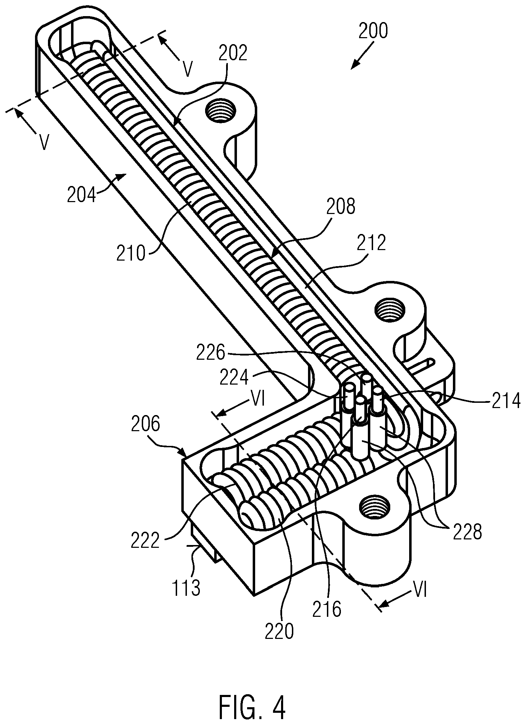

Die Fig. 4 zeigt eine perspektivische Draufsicht auf ein noch nicht verfülltes Backenelement 200 entsprechend dem Backenelement 104 gemäß Fig. 3 mit einer trogförmigen Ausnehmung 202, die L-förmig ausgeformt ist und einem Längsschenkel 204 und einem Querschenkel 206 ausformt. So ergibt sich eine L-förmige Grundform der trogförmigen Ausnehmungen 202.

Bezugszeichen 208 kennzeichnet einen Heizleiter, der als koaxialer Mandelheizleiter ausgebildet und wendelförmig in die trogförmige Ausnehmung 202 eingelegt ist. Im Bereich des Längsschenkels 204 ist lediglich eine Wendel angeordnet, die sich im Wesentlichen über die gesamte Länge des Längsschenkels 204 erstreckt, wobei das von dem freien Ende dieser Längswendel 210 abragende Ende des Heizleiters 200 über einen gradlinig verlaufenden Leiterabschnitt 212 in den Eckbereich des L-förmigen Backenelementes 200 zurückgeführt und dort zur Ausbildung eines ersten Anschlusselementes 214 herausgeführt ist. Unmittelbar benachbart dazu befindet sich ein zweites Anschlusselement 216, welches durch das andere Ende des Heizleiters 208 gebildet ist und zunächst in eine erste Querwendel 220 übergeht, die bis zu dem freien inneren Ende des Querschenkels 206 gelegt ist und dort in eine zweite Querwendel 222 übergeht, die bis in den Eckbereich des Backenelementes 200 geführt ist. Dort überschneidet sich die Mittellängsachse der Längswendel 210 mit Windungen der zweiten Querwendel 220. Die zweite Querwendel 220 reicht mit ihrer letzten Windung in etwa bis zu der nach außen, also benachbart zu dem Leiterabschnitt liegenden Außenumfangsfläche der Längswendel 210.

Nahe des Eckbereiches und unmittelbar benachbart zu den beiden Anschlusselementen 214, 216 sind zwei Thermoelemente 224, 226 vorgesehen, von denen das mit Bezugszeichen 224 gekennzeichnete Thermoelement bis zu dem Boden der trogförmigen Ausnehmung 202 ragt, um die Ist-Temperatur an der Siegelfläche 113 zu ermitteln, und das andere Thermoelement 226 zwischen den beiden Querwendeln 220, 222 angeordnet ist und auf Höhe dieser endet. Dieses zweite Thermoelement 226 dient der Überprüfung der Ist-Temperatur des Heizleiters 208.

Die Thermoelemente 224, 226 sowie die beiden Anschlusselemente 214, 216 sind jeweils durch keramische Hülsen 228 hindurchgeführt, die nach dem Einlegen des wendelförmig gelegten Heizleiters 208 von einer Lotmasse umgeben und mit dieser stoffschlüssig verbunden werden, die zur Verbesserung der Wärmeleitung zwischen dem Heizleiter 208 und dem Backenelement 200 in die trogförmige Ausnehmung 202 schmelzflüssig eingefüllt wird.

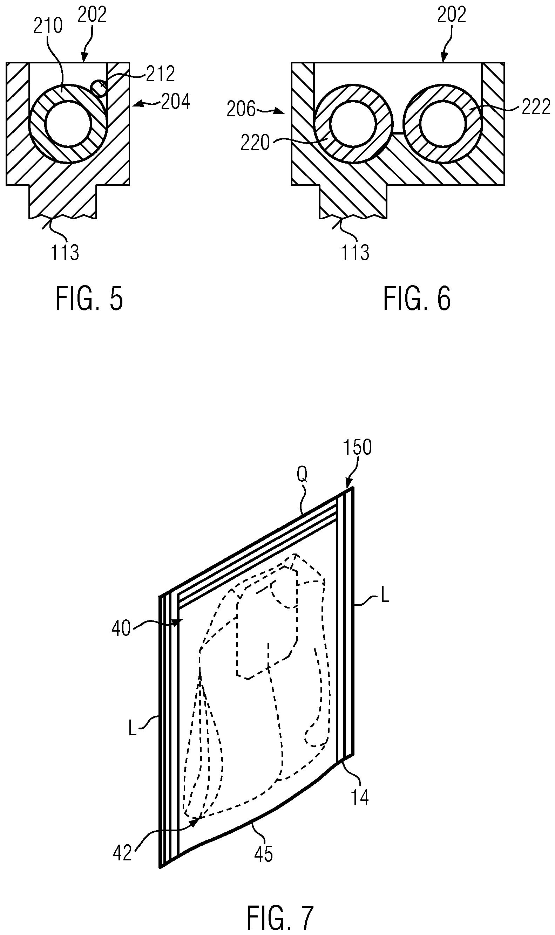

Die Figuren 5 und 6 lassen die Gestaltung des Bodens der trogförmigen Ausnehmung 202 erkennen. Dort ist der Boden als trogförmige Mulde 230 ausgebildet, deren konkave Krümmung dem Radius der Wendeln des Heizleiters 208 angepasst ist. Der Längsschenkel 204 weist eine einzige entsprechende Mulde 230 auf. Der Querschenkel 206 hat zwei solcher Mulden für die Aufnahme jeweils einer der Querwendeln 220, 222.

Figur 7 verdeutlicht die in der zuvor beschriebenen Weise hergestellte Verpackung bestehend aus einer mit Bezugszeichen 150 gekennzeichneten Umhüllung, die als umfängliche Umhüllung den punktiert dargestellten Beutel 42 mit Faden und Etikett in sich aufnimmt und aromadicht einschließt. Die Umhüllung 150 hat eine erste Breitseite, die durch die Falz 45 verschlossen ist. Von dieser Falz 45 gehen rechtwinklig Längssiegelungen L ab. Am Ende dieser Längssiegelungen L befindet sich eine Quersiegelung Q, die parallel zu der Falz 45 verläuft. Die Längs- und Quersiegelungen L, Q gehen ineinander über bzw. durchsetzen sich.

### Bezugszeichenliste

- 2: Beutelherstellungseinrichtung
- 4: Aufnahme
- 10: Beutelhandhabungseinrichtung
- 12: vorderer Beutelhandhabungsarm
- 13: hinterer Beutelhandhabungsarm
- 14: Koppelstange
- 15: Klemmschuh
- 16: Klemmfeder
- 20: Folienhandhabungseinrichtung
- 30: Antriebseinrichtung
- 32: Kurvenscheibe
- 33: Antriebswelle
- 34: Abnehmer
- 36: Lagerachse
- 37: Hebel
- 40: Folie
- 42: Beutel
- 44: Schenkel
- 45: Falz
- 50: Transportrad
- 52: Klemmarm
- 100: Siegelstation
- 102: untere Siegelbacke
- 104: Backenelement
- 106: Backenelement
- 108: obere Siegelbacke
- 110: Gegenbackenelement
- 112: Gegenbackenelement
- 113: L-förmige Siegelfläche
- 114: L-förmige Siegelfläche
- 115: Antrieb
- 116: Antriebswelle
- 118: Gegenbacken-Pleuel
- 120: Siegelbacken-Pleuel
- 122: Gelenkpunkt
- 124: Siegelbacken-Schwenkarm
- 126: Siegelbacken-Schwenkachse
- 128: Gegenbacken-Schwenkarm
- 130: Gegenbacken-Schwenkachse
- 150: Umhüllung
- 200: Backenelement
- 202: Ausnehmung
- 204: Längsschenkel
- 206: Querschenkel
- 208: Heizleiter
- 210: Längswendel
- 212: gradlinig verlaufender Leiterabschnitt
- 214: erstes Anschlusselement
- 216: zweites Anschlusselement
- 220: erste Querwendel
- 222: zweite Querwendel

- 224: Thermoelement
- 226: Thermoelement
- 228: keramische Hülse
- 230: Mulde
- L: Längssiegelung
- Q: Quersiegelung
- I-VI: Position der Aufnahme 4

## Patentansprüche

1. Vorrichtung zum Herstellen eines in einer Umhüllung (150) aufgenommenen, ein brühfähiges Material enthaltenden Beutels (42) mit einer Beutelherstellungseinrichtung (2), die dazu eingerichtet ist, einen Beutel (42) enthaltend brühfähiges Material herzustellen, und mit einer Siegelstation (100) mit Backenelementen (200), die einander gegenüberliegende Siegelflächen ausbilden, die zum Einsiegeln des Beutels (42) von gegenüberliegenden Seiten auf die Umhüllung (150) einwirken,
**dadurch gekennzeichnet,**
**dass** zumindest eines der Backenelemente (200) unterhalb der Siegelfläche (113) eine trogförmige Ausnehmung (202) ausbildet, in der ein wendelförmig gelegter Heizleiter (208) aufgenommen ist.

2. Vorrichtung nach Anspruch 1, **dadurch gekennzeichnet, dass** das zumindest eine Backenelement (200) und die trogförmige Ausnehmung (202) L-förmig mit einem Längsschenkel (204) und einem Querschenkel (206) ausgebildet sind und dass der Heizleiter (208) eine Längswendel (210) und eine Querwendel (220, 222) ausbildet, die rechtwinklig zueinander angeordnet sind und unmittelbar aneinander anschließen.

3. Vorrichtung nach Anspruch 1 oder 2, **dadurch gekennzeichnet, dass** in der trogförmigen Ausnehmung (202) zwei Querwendeln (220, 222) nebeneinander angeordnet sind.

4. Vorrichtung nach einem der vorherigen Ansprüche, **dadurch gekennzeichnet, dass** zumindest zwei Thermoelemente (226) in die trogförmige Ausnehmung (202) eingebracht sind.

5. Vorrichtung nach einem der vorherigen Ansprüche, **dadurch gekennzeichnet, dass** die trogförmige Ausnehmung mit einer Lotmasse ausgegossen ist.

6. Vorrichtung nach einem der vorherigen Ansprüche, **dadurch gekennzeichnet, dass** der Boden der trogförmigen Ausnehmung (202) eine auf die Krümmung des wendelförmig gelegten Heizleiters (208) angepasst ausgebildete konkave Mulde (230) hat.

7. Vorrichtung nach einem der vorherigen Ansprüche, **dadurch gekennzeichnet, dass** das zumindest eine Backenelement (200) aus einem gut wärmeleitfähigen Stahl besteht.

8. Vorrichtung nach einem der vorherigen Ansprüche, **dadurch gekennzeichnet, dass** der Heizleiter (208) durch einen koaxialen Mantelheizleiter gebildet ist.

## Claims

1. Device for manufacturing a pouch (42) containing a brewable material accommodated in a wrapping (150), comprising a pouch manufacturing device (2) adapted to manufacture a pouch (42) containing brewable material, and a sealing station (100) with jaw elements (200) forming opposing sealing surfaces acting on the wrapping (150) from opposite sides for sealing the pouch (42),
**characterized in that**
that at least one of the jaw elements (200) forms a trough-shaped recess (202) below the sealing surface (113), in which a helically laid heating conductor (208) is accommodated.

2. Device according to claim 1, **characterized in that** the jaw element (200) and the trough-shaped recess (202) are L-shaped with a longitudinal leg (204) and a transverse leg (206), and **in that** the heating conductor (208) forms a longitudinal helix (210) and a transverse helix (220, 222) which are arranged at right angles to one another and directly adjoin one another.

3. Device according to claim 1 or 2, **characterized in that** two transverse helices (220, 222) are arranged next to each other in the trough-shaped recess (202).

4. Device according to one of the preceding claims, **characterized in that** at least two thermocouples (226) are introduced into the trough-shaped recess (202).

5. Device according to one of the preceding claims, **characterized in that** the trough-shaped recess is cast with a solder compound.

6. Device according to one of the preceding claims, **characterized in that** the bottom of the trough-shaped recess (202) has a concave depression (230) formed to match the curvature of the helically laid heating conductor (208).

7. Device according to one of the preceding claims, **characterized in that** the jaw element (200) is made of a steel with good thermal conductivity.

8. Device according to one of the preceding claims, **characterized in that** the heating conductor (208) is formed by a coaxial sheath heating conductor.

## Revendications

1. Dispositif de fabrication d'un sachet (42) reçu dans une enveloppe (150) et contenant un matériau pouvant être infusé, comprenant un dispositif de fabrication de sachet (2) qui est configuré pour fabriquer un sachet (42) contenant un matériau pouvant être infusé, et un poste de scellement (100) avec des éléments de mâchoire (200) qui forment des surfaces de scellement mutuellement opposées qui agissent sur l'enveloppe (150) pour sceller le sachet (42) depuis des côtés opposés,
**caractérisé en ce que**
au moins l'un des éléments de mâchoire (200) forme un évidement en forme d'auge (202) sous la surface de scellement (113), dans lequel un conducteur chauffant (208) placé en serpentin est logé.

2. Dispositif selon la revendication 1, **caractérisé en ce que** le au moins un élément de mâchoire (200) et l'évidement en forme d'auge (202) sont réalisés en forme de L avec une branche longitudinale (204) et une branche transversale (206), et **en ce que** le conducteur chauffant (208) forme un serpentin longitudinal (210) et un serpentin transversal (220, 222) qui sont agencés à angle droit l'une par rapport à l'autre et se raccordent directement l'un à l'autre.

3. Dispositif selon la revendication 1 ou 2, **caractérisé en ce que** deux serpentins transversaux (220, 222) sont agencés l'un à côté de l'autre dans l'évidement en forme d'auge (202).

4. Dispositif selon l'une quelconque des revendications précédentes, **caractérisé en ce qu'**au moins deux thermocouples (226) sont insérés dans l'évidement en forme d'auge (202).

5. Dispositif selon l'une quelconque des revendications précédentes, **caractérisé en ce que** l'évidement en forme d'auge est rempli d'une masse de soudure.

6. Dispositif selon l'une quelconque des revendications précédentes, **caractérisé en ce que** le fond de l'évidement en forme d'auge (202) présente une cavité concave (230) adaptée à la courbure du conducteur chauffant (208) placé en forme de serpentin.

7. Dispositif selon l'une quelconque des revendications précédentes, **caractérisé en ce que** le au moins un élément de mâchoire (200) est constitué d'un acier bon conducteur de la chaleur.

8. Dispositif selon l'une quelconque des revendications précédentes, **caractérisé en ce que** le conducteur chauffant (208) est réalisé par un conducteur chauffant à gaine coaxial.
